# EUROPEAN PATENT APPLICATION

(11) **EP 3 952 051 A1**
(43) Date of publication of application: **09.02.2022**
(21) Application number: 20831925.1
(22) Date of filing: 02.06.2020
(51) Int. Cl.: H02J 7/00, H01M 10/44

(54) **BATTERY CHARGING METHOD, ELECTRONIC DEVICE AND COMPUTER-READABLE STORAGE MEDIUM**

(30) Priority: 28.06.2019 CN 201910578585
(71) Applicant: GUANGDONG OPPO MOBILE TELECOMMUNICATIONS CORP., LTD., Dongguan, Guangdong 523860 (CN)
(72) Inventor: XIE, Hongbin, Dongguan, Guangdong 523860 (CN); ZHANG, Jun, Dongguan, Guangdong 523860 (CN)
(74) Representative: Ipside
(86) International application number: PCT/CN2020/093891
(87) International publication number: WO 2020/259225

(57) **Abstract**

Disclosed is a battery charging method, comprising: during battery charging, acquiring an electric quantity change value of a battery when the voltage of the battery is charged from an initial voltage to a target voltage; determining an electric quantity change value per unit voltage according to a voltage difference value between the target voltage and the initial voltage, and the electric quantity change value; and when the electric quantity change value per unit voltage is less than or equal to a preset numerical value, reducing a charging current acting on the battery until the unit voltage change value is greater than the preset numerical value.

## Description

### CROSS-REFERENCE TO RELATED APPLICATIONS

The present application claims priority of a Chinese Patent Application submitted to China Intellectual Property Office on June 28, 2019, with an application No. 201910578585.8 and a title of "BATTERY CHARGING METHOD, ELECTRONIC DEVICE AND COMPUTER-READABLE STORAGE MEDIUM"; the entire contents thereof are incorporated into the present application by reference.

### TECHNICAL FIELD

The present application relates to the technical field of batteries, and in particular, to a battery charging method, an electronic device, and a computer-readable storage medium.

### BACKGROUND

Lithium-ion batteries are widely used in mobile terminals, electric vehicles and ground energy storage due to their advantages of high energy density, high power density, high conversion efficiency, long life, and so on. At present, lithium-ion batteries generally use constant current, constant voltage, or constant current-constant voltage charging methods. These charging methods use preset current or voltage values. However, with the use of lithium-ion batteries, attenuation of the capacity of lithium-ion batteries will occur. At this time, charging is still performed at the preset current or voltage values, which not only accelerates aging of the batteries, but also increases the charging time.

### SUMMARY OF THE DISCLOSURE

According to embodiments of the present application, a battery charging method, an electronic device, and a computer-readable storage medium are provided.

A battery charging method comprises: during a process of charging a battery, acquiring a change value of electricity amount of the battery when a voltage of the battery is charged from an initial voltage to a target voltage; determining a change value of electricity amount per unit voltage according to a voltage difference between the target voltage and the initial voltage, and the change value of electricity amount; and when the change value of electricity amount per unit voltage is less than or equal to a preset value, reducing a charging current acting on the battery until the unit voltage change value is greater than the preset value.

A battery charging method comprises: acquiring environment information of an environment where a battery is located and parameter information of the battery; determining a charging current acting on the battery according to a mapping relationship between the environment information, the parameter information, and the charging current; and charging the battery according to the charging current; wherein a method for acquiring the mapping relationship comprises: acquiring environment information of an environment where the battery is located, parameter information of the battery, and a charging current acting on the battery during a test process; wherein a change value of electricity amount per unit voltage of the battery is greater than a preset value under the charging current; and storing the environment information, the parameter information, and the charging current in association into the battery.

An electronic device comprises a memory and a processor, the memory stores a computer program, and the computer program, when being executed by the processor, makes the processor execute operations of the battery charging methods according to embodiments of the present application.

A computer readable storage medium stores a computer program therein, and the computer program, when being executed by a processor, implements operations of the battery charging methods according to embodiments of the present application.

In these embodiments, during a process of charging a battery, a voltage difference between a target voltage and an initial voltage and a change value of electricity amount are acquired, and a change value of electricity amount per unit voltage is determined; when the change value of electricity amount per unit voltage is less than or equal to a preset value, a charging current acting on the battery is reduced until the unit voltage change value is greater than the preset value. The maximum charging current that can be born by a current health state of the battery is determined according to the change value of electricity amount per unit voltage, and the charging current is controlled to be less than or equal to the maximum charging current to perform charging, not only is a life of the battery not influenced, but also charging time is shortened.

### BRIEF DESCRIPTION OF THE DRAWINGS

In order to describe technical solutions in embodiments of the present application or the prior art more clearly, drawings required being used in description of the embodiments or the prior art will be simply introduced below. Obviously, the drawings in the following description are merely some embodiments of the present application. For one of ordinary skill in the art, it is also possible to obtain other drawings according to these drawings without paying any creative work.
FIG. 1 is a block diagram of an internal structure of an electronic device in an embodiment.
FIG. 2 is a flow chart of a battery charging method in an embodiment.
FIG. 3 is a schematic view of a first curve in an embodiment.
FIG. 4 is a schematic view of a second curve in an embodiment.
FIG. 5 is a flow chart of a battery charging method in another embodiment.
FIG. 6 is a structural block diagram of a battery charging device in an embodiment.
FIG. 7 is a structural block diagram of a battery charging device in another embodiment.
FIG. 8 is a block diagram of an internal structure of an electronic device in another embodiment.

### DETAILED DESCRIPTION

In order to make purposes, technical solutions, and advantages of the present application be clearer and more apparent, the present application will be further described in detail below in accompany with the drawings and embodiment. It should be understood that the specific embodiments described herein are merely intended to illustrate the present application but are not intended to limit the present application.

The battery charging method in embodiments of the present application can be applied to an electronic device. The electronic device can be a computer device, a personal digital assistant, a tablet computer, a smart phone, a wearable device, etc. When the electronic device is being charged, the maximum charging current that can be born by a current health state of the battery is determined according to a change value of electricity amount per unit voltage, and the charging current is controlled to be less than or equal to the maximum charging current to perform charging.

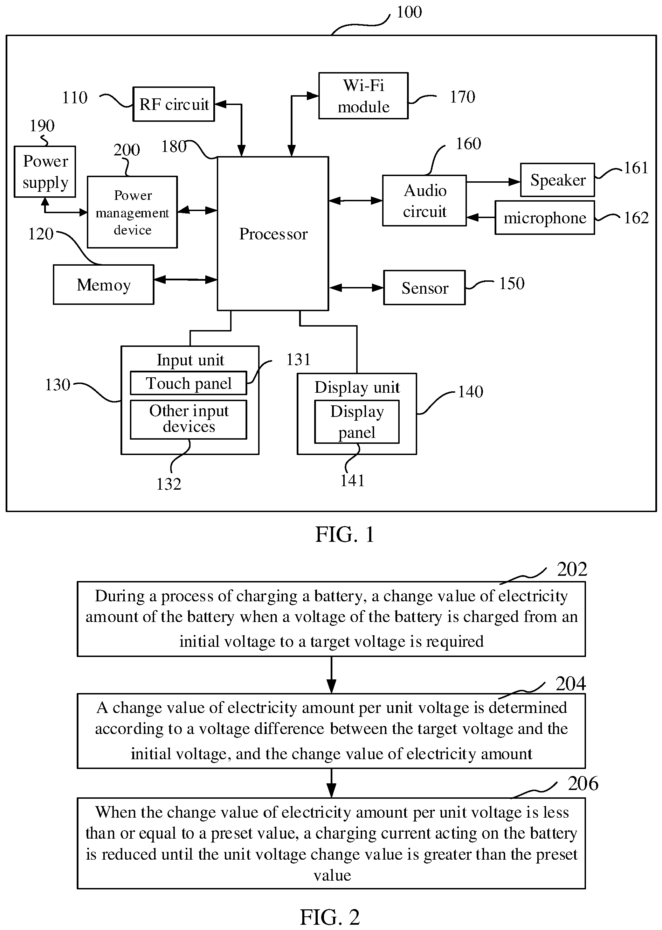

In one embodiment, as shown in FIG. 1, the electronic device includes: a radio frequency (RF) circuit 110, a memory 120, an input unit 130, a display unit 140, a sensor 150, an audio circuit 160, a wireless fidelity (Wi-Fi) module 170, a processor 180, a power supply 190, and other components. Those skilled in the art can understand that the structure of the mobile phone shown in FIG. 1 does not constitute any limitation to the mobile phone, and may include more or less components than those shown in the figure, or a combination of certain components, or different component arrangements.

Among them, the power supply 190 is logically connected to the processor 180 through a power management device 200, so as to realize functions such as charging, discharging, and power consumption management through the power management device 200. For example, the power management device 200 can determine the maximum charging current that can be born by a current health state of the power supply, and control a charging current to be less than or equal to the maximum charging current to perform charging. Specifically, the power management device 200 obtains a voltage difference and a change value of electricity amount under the voltage difference, and determines electricity amount per unit voltage and a change value of the electricity amount under the unit voltage according to the voltage difference and the change value of the electricity amount. The electricity amount under the unit voltage can reflect a current health status of the power supply, and the maximum charging current that can be born by a current health state of the power supply can be determined according to the change value of the electricity amount under the unit voltage.

The RF circuit 110 can be used for reception and transmission of signals during processes of sending and receiving information or talking. It can receive downlink information of a base station and send it to the processor 180 for processing, and can also send uplink data to the base station. Generally, the RF circuit includes, but is not limited to, an antenna, at least one amplifier, a transceiver, a coupler, a low noise amplifier (LNA), a duplexer, and so on. In addition, the RF circuit 110 can also communicate with the network and other devices through wireless communication. The above-mentioned wireless communication can use any communication standard or protocol, which includes but is not limited to Global System of Mobile communication (GSM), General Packet Radio Service (GPRS), Code Division Multiple Access (CDMA), Wideband Code Division Multiple Access (WCDMA), Long Term Evolution (LTE), E-mail, Short Messaging Service (SMS), etc.

The memory 120 can be used to store software programs and modules. The processor 180 executes various functional applications and data processing of the mobile phone by running the software programs and modules stored in the memory 120. The memory 120 can mainly include a program storage area and a data storage area, wherein the program storage area can store an operating system, an application program required by at least one function (such as an application program for a sound playback function, an application program for an image playback function, etc.), and so on; the data storage area can store data created according to use of the mobile phone (such as audio data, address book, etc.). In addition, the memory 120 can include a high-speed random access memory, and can also include a non-volatile memory, such as at least one magnetic disk storage device, a flash memory device, or other volatile solid-state storage devices.

The input unit 130 can be used to receive input digital or character information, and generate key signal input related to user settings and function control of the mobile phone 100. Specifically, the input unit 130 can include a touch panel 131 and other input devices 132. The touch panel 131, also called a touch screen, can collect users' touch operations on or near it (for example, users' operations using any suitable objects or accessories such as fingers, stylus, etc., on the touch panel 131 or near the touch panel 131), and drive corresponding connection devices according to a preset program. In one embodiment, the touch panel 131 can include two parts: a touch detection device and a touch controller. Among them, the touch detection device detects a user's touch position, and detects a signal brought by the touch operation and transmits the signal to the touch controller; the touch controller receives the touch information from the touch detection device, converts it into contact coordinates, and then sends it to the processor 180, and can receive and execute commands sent by the processor 180. In addition, the touch panel 131 can be implemented in multiple types, such as resistive, capacitive, infrared, and surface acoustic wave. In addition to the touch panel 131, the input unit 130 can also include the other input devices 132. Specifically, the other input device 132 can include, but is not limited to, one or more of a physical keyboard, function keys (such as a volume control key, a switch key, etc.), and so on.

The display unit 140 can be used to display information input by a user or information provided to a user, and various menus of the mobile phone. The display unit 140 can include a display panel 141. In one embodiment, the display panel 141 can be configured in the form of a liquid crystal display (LCD), an organic light-emitting diode (OLED), etc. In one embodiment, the touch panel 131 can cover the display panel 141. When the touch panel 131 detects a touch operation on or near it, the operation is transmitted to the processor 180 to determine the type of the touch event, and then the processor 180 provides corresponding visual output on the display panel 141 according to the type of touch event. Although in FIG. 1, the touch panel 131 and the display panel 141 serve as two independent components to implement input and input functions of the mobile phone, but in some embodiments, the touch panel 131 and the display panel 141 may be integrated to realize input and output functions of the mobile phone.

The mobile phone 100 can also include at least one sensor 150, such as a light sensor, a motion sensor, and other sensors. Specifically, the light sensor can include an ambient light sensor and a proximity sensor. The ambient light sensor can adjust a brightness of the display panel 141 according to a brightness of ambient light. The proximity sensor can close the display panel 141 and/or backlight when the mobile phone is moved to an ear. The motion sensor can include acceleration sensors. The acceleration sensors can detect magnitudes of acceleration in various directions, can detect the magnitude and direction of gravity during stationary, and can be used to identify application gestures (such as horizontal and vertical screen switching) of the mobile phone and functions related to vibration recognition (such as a pedometer, percussion, etc.), and so on. In addition, the mobile phone can also be equipped with other sensors such as a gyroscope, a barometer, a hygrometer, a thermometer, an infrared sensor, and so on.

The audio circuit 160, the speaker 161 and the microphone 162 can provide an audio interface between a user and the mobile phone. The audio circuit 160 can transmit an electrical signal converted from received audio data to the speaker 161, and the electrical signal is converted by the speaker 161 into a sound signal to output; on the other hand, the microphone 162 converts a collected sound signal into an electrical signal, which is received by the audio circuit 160 and converted into audio data, then processed by the audio data output processor 180, and can be sent to another mobile phone via the RF circuit 110, or the audio data can be output to the memory 120 for subsequent processing.

Wi-Fi belongs to a short-distance wireless transmission technology. The mobile phone can help users send and receive emails, browse web pages, and access streaming media through the Wi-Fi module 170. It provides users with wireless broadband Internet access. Although FIG. 1 shows the Wi-Fi module 170, it is understandable that it is not a necessary component of the mobile phone 100 and can be omitted as required.

The processor 180 is a control center of the mobile phone. It uses various interfaces and lines to connect various parts of the entire mobile phone, and executes various functions of the mobile phone and processes data by running or executing software programs and/or modules stored in the memory 120 and calling data stored in the memory 120, so as to monitor the mobile phone as a whole. In one embodiment, the processor 180 can include one or more processing units. In one embodiment, the processor 180 can integrate an application processor and a modem processor, wherein the application processor mainly processes an operating system, a user interface, application programs, and so on; the modem processor mainly processes wireless communication. It can be understood that the foregoing modem processor may not be integrated into the processor 180.

In one embodiment, the mobile phone 100 can further include a camera, a Bluetooth module, etc.

FIG. 2 is a flow chart of a battery charging method in one embodiment. As shown in FIG. 2, a battery charging method can be applied in the electronic device in FIG. 1, and includes the following.

Operation 202, during a process of charging a battery, a change value of electricity amount of the battery when a voltage of the battery is charged from an initial voltage to a target voltage is required.

Operation 204, a change value of electricity amount per unit voltage is determined according to a voltage difference between the target voltage and the initial voltage, and the change value of electricity amount.

Operation 206, when the change value of electricity amount per unit voltage is less than or equal to a preset value, a charging current acting on the battery is reduced until the unit voltage change value is greater than the preset value.

A lithium-ion battery is a secondary battery consisting of a positive electrode, a negative electrode, a separator and an electrolyte. The positive electrode and the negative electrode are immersed in the electrolyte. In order to avoid the positive and negative electrodes from generating short-circuit through the electrolyte, the positive and negative electrodes are separated by the separator. Lithium ions use the electrolyte as a medium to move between the positive and negative electrodes and thereby realize charge and discharge of the battery. During charging and discharging processes, lithium ions are intercalated and deintercalated back and forth between the two electrodes: during charging, lithium ions are deintercalated from the positive electrode and inserted into the negative electrode through the electrolyte, and the negative electrode is in a lithium-rich state; the contrary is the case during discharge.

After the battery is cycled for a certain period of time, that materials of electrode plates of the positive and negative electrodes inside the battery become less, the electrolyte concentration decreases, and other factors cause the battery to age, and that the battery has been charged and discharged irregularly for a long time, the battery has been exposed to environments with excessively high or excessively low temperatures for a long time, and other factors will also accelerate the aging of the battery. After the battery ages, the most obvious feature is capacity degradation of the battery. Because lithium-ion batteries generally use constant current, constant voltage, or constant current-constant voltage charging methods, these charging methods use preset current values or voltage values; after the battery is aging, it is still charged with a preset current value or voltage value; not only is the maximum charging current that can be accepted by the current health state of the battery exceed and is the battery aging accelerated, but also a resistance increases after the battery is aging, a float voltage increases at the same charging current value and reaches a cut-off voltage of a constant current stage earlier, which makes charging time in a constant voltage stage become longer, thereby increasing the overall charging time.

The power management device 200 obtains the voltage difference and the change value of electricity amount under the voltage difference, and a charged electricity amount can be obtained by integrating the charging current. According to the voltage difference and the change value of electricity amount, electricity amount per unit voltage and a change value of electricity amount per unit voltage can be determined. Among them, the electricity amount per unit voltage can reflect a current health state of the power supply, and the maximum charging current that can be born by the current health state of the power supply can be determined according to the change value of electricity amount per unit voltage.

During a charging process of a battery, a voltage of the battery is changing. In order to count the voltage change, unit voltage statistics is used. Among them, the unit voltage can be a preset voltage interval value, for example, a change value of electricity amount collected at every interval of 2V voltage, then 2V is the unit voltage; the unit voltage can also be a voltage difference at a preset time interval, for example, a change value of electricity amount collected at every interval of 2 seconds, then the unit voltage is a voltage difference accumulated in 2 seconds.

Among them, the initial voltage refers to an initial value each time of collecting the voltage, and the target voltage refers to an end value each time of collecting voltage, and a difference between the target voltage and the initial voltage can be the unit voltage. For example, when the voltage of the battery changes from 4.0V to 4.1V, and a change value of electricity amount corresponding to the 0.1V is collected, then 4.0V is the initial voltage, and 4.1V is the target voltage.

Specifically, the electricity amount per unit voltage can reflect the current health state of the battery. Before leaving the factory, a standard value of electricity amount of the battery per unit voltage corresponding to each aging stage is tested, and an acquired electricity amount per unit voltage is compared with the standard value to determine the current health state of the battery. Generally speaking, the electricity amount per unit voltage of the battery after aging will be less than the electricity amount per unit voltage of the battery without aging. When it is detected that an aging degree of the battery is serious, a prompt message can be output to remind a user to replace the battery.

Specifically, the maximum charging current that can be born by the current health status of the battery can be determined according to a relationship between the change value of the electricity amount per unit voltage and a preset value. The preset value can be set according to actual applications, optionally, the preset value is zero.

If the change value of electricity amount per unit voltage is less than or equal to the preset value, it means that the charging current has exceeded the maximum charging current that can be born by a current health state of the battery, a solid phase potential of the negative electrode of the battery is too low to cause a phenomenon of lithium precipitation. The precipitation of lithium leads to loss of lithium ions, which results in degradation of battery capacity, and precipitated lithium will react with electrolyte, consume the electrolyte, and release heat; and in severe cases, a diaphragm will be pierced and short-circuit between positive and negative electrodes is caused. Therefore, the charging current is reduced to perform the charging operation until the change value of electricity amount per unit voltage is greater than the preset value.

If the change value of electricity amount per unit voltage is greater than the preset value, it means that the charging current is within the maximum charging current that can be born by a current health state of the battery at this time, therefore the charging current is increased or the charging current is kept being unchanged.

Optionally, the battery is controlled to be charged according to the maximum charging current that can be born by a current health state of the battery, and the maximum charging current that can be born by a current health state of the battery can be determined according to the following method: if the change value of electricity amount per unit voltage is greater than the preset value, the charging current is increased until the change value of electricity amount per unit voltage is less than or equal to the preset value, then a charging current corresponding to a change value being greater than the preset value and closest to the preset value is taken as the maximum charging current; alternatively, if the change value of electricity amount per unit voltage is greater than the preset value, a difference between the change value and the preset value is calculated, and when the difference is greater than a predetermined value, the charging current acting on the battery is increased until the difference is less than or equal to the predetermined value, and a charging current corresponding to the difference being less than or equal to the predetermined value is taken as the maximum charging current.

In the battery charging method of this embodiment, during a process of charging a battery, a voltage difference between a target voltage and an initial voltage and a change value of electricity amount are acquired, and a change value of electricity amount per unit voltage is determined; when the change value of electricity amount per unit voltage is less than or equal to a preset value, a charging current acting on the battery is reduced until the unit voltage change value is greater than the preset value. The maximum charging current that can be born by a current health state of the battery is determined according to the change value of electricity amount per unit voltage, and the charging current is controlled to be less than or equal to the maximum charging current, not only is a life of the battery not influenced, but also charging time is shortened.

In one embodiment, the method further includes: when the change value of electricity amount per unit voltage is greater than the preset value, calculating the difference between the change value and the preset value; when the difference is greater than the predetermined value, increasing the charging current acting on the battery; and when the difference is less than or equal to the predetermined value, keeping the charging current acting on the battery being unchanged.

Specifically, the difference between the change value of electricity amount per unit voltage and the preset value is acquired. If the difference is greater than the predetermined value, it means that the charging current has not reached the maximum charging current that can be born by a current health state of the battery at this time. Therefore, the charging current acting on the battery can be increased until the difference between the change value of electricity amount per unit voltage and the preset value is less than or equal to the predetermined value (the predetermined value is positive and infinitely small, and can specifically be set according to actual applications), then the charging current at this time is taken as the maximum charging current that can be born by a current health state of the battery, and the maximum charging current is kept being unchanged to perform the charging operation.

When charging time reaches preset charging time or the voltage of the battery reaches a preset voltage, the charging operation is ended.

In this embodiment, the charging current is controlled to be less than or equal to the maximum charging current that can be born by a current health state of the battery, not only is a life of the battery not influenced, but also charging time is shortened.

In one embodiment, the operation of determining a change value of electricity amount per unit voltage according to a voltage difference between the target voltage and the initial voltage, and the change value of electricity amount includes: derivating the voltage difference using the change value of electricity amount to obtain a first derivative value; derivating the voltage difference using the first derivative value to obtain a second derivative value; and using the second derivative value as the change value of the electricity amount per unit voltage.

Specifically, the voltage difference dV is derivated using the change value of electricity amount dQ to obtain the first derivative value dQ/dV, the first derivative value reflects electricity amount per unit voltage, and the electricity amount per unit voltage reflects a current health state of the battery.

The voltage difference dV is further derivated using the first derivative value dQ/dV to obtain the second derivative vale (dQ/dV)/dV, the second derivative value reflects a change value of electricity amount per unit voltage; the maximum charging current that can be born by a current health state of the battery can be determined according to the change value of electricity amount per unit voltage.

In this embodiment, the power management device 200 builds a calculation program therein, which determines the change value of electricity amount per unit voltage by derivating, such that the calculation result is accurate.

In one embodiment, the operation of determining a change value of electricity amount per unit voltage according to a voltage difference between the target voltage and the initial voltage, and the change value of electricity amount includes: generating a first curve according to the voltage difference and the change value of electricity amount, wherein the first curve represents a change relationship between electricity amount per unit voltage and the voltage of the battery; generating a second curve according to the first curve and the voltage difference, wherein the second curve represents a change relationship between a change value of electricity amount per unit voltage and the voltage of the battery; acquiring a vertical axis value of the second curve to obtain the change value of electricity amount per unit voltage.

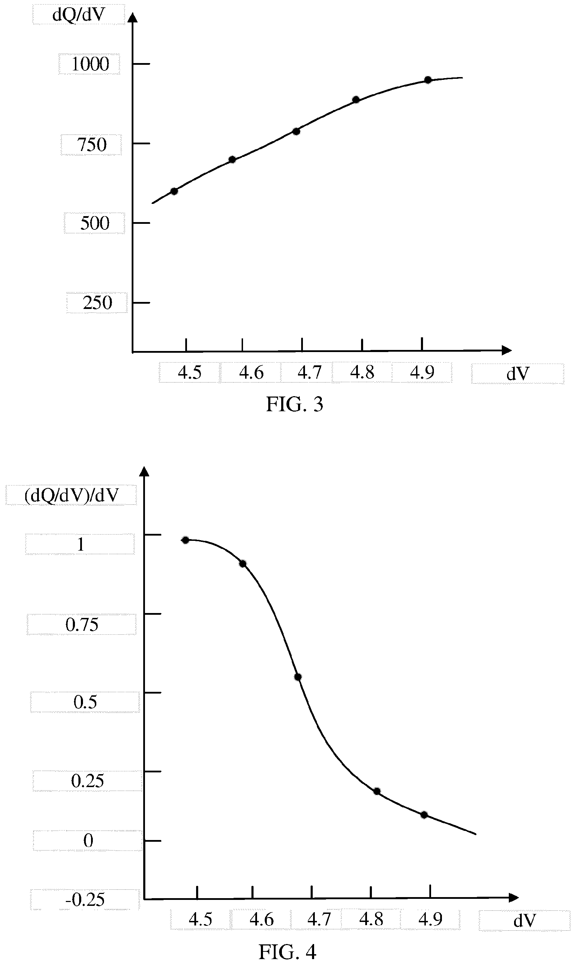

As shown in FIG. 3, FIG. 3 is a schematic diagram of the first curve. The abscissa of the first curve is the voltage, the ordinate of the first curve is the electricity amount per unit voltage, and the first curve represents the change relationship between the electric quantity per unit voltage and the voltage of the battery. Specifically, the voltage difference value dV is derivated by the change value of electricity amount dQ to obtain the first derivative value dQ/dV, and the (dQ/dV)-U curve is obtained.

As shown in FIG. 4, FIG. 4 is a schematic diagram of the second curve. The abscissa of the second curve is the voltage, the ordinate of the second curve is the change value of electricity amount per unit voltage, and the second curve represents the change relationship between the change value of electric quantity per unit voltage and the voltage of the battery. The voltage difference value dV is further derivated by the first derivative value dQ/dV to obtain the second derivative value (dQ/dV)/dV, and the (dQ/dV)/dV-U curve is obtained.

In this embodiment, the power management device 200 builds a curve creation program therein. A change condition of the change value of electricity amount per unit voltage is monitored by curve diagrams, and regulation of the charging current according to the change condition of the change value of electricity amount per unit voltage in time is realized.

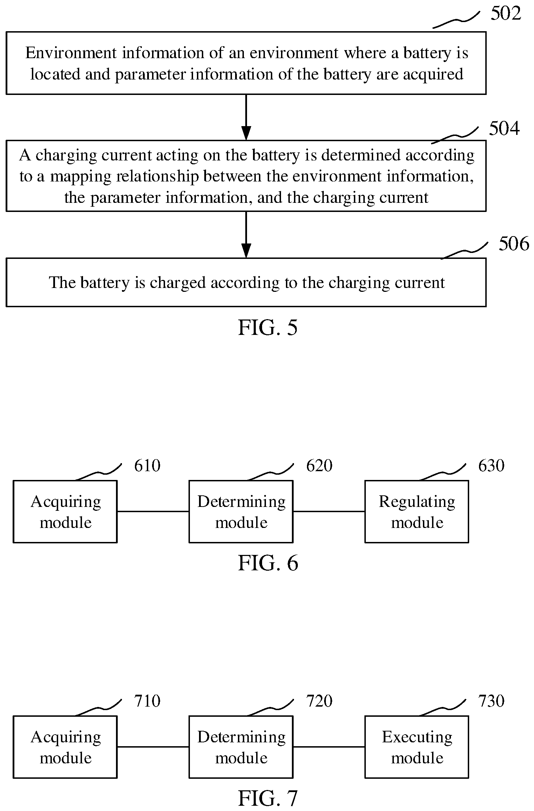

FIG. 5 is a flow chart of a battery charging method in another embodiment. As shown in FIG. 5, a battery charging method can be applied in the electronic device in FIG. 1 and includes the following.

Operation 502, environment information of an environment where a battery is located and parameter information of the battery are acquired.

Operation 504, a charging current acting on the battery is determined according to a mapping relationship between the environment information, the parameter information, and the charging current.

Operation 506, the battery is charged according to the charging current.

Among them, a method for acquiring the mapping relationship comprises: acquiring environment information of an environment where the battery is located, parameter information of the battery, and a charging current acting on the battery during a test process; wherein a change value of electricity amount per unit voltage of the battery is greater than a preset value under the charging current; and storing the environment information, the parameter information, and the charging current in association into the battery.

The maximum charging current that can be born by a current health state of the battery relates to the environment information of an environment where the battery is located and the parameter information of the battery; wherein the environment information of an environment where the battery is located can include a temperature and so on, and the parameter information of the battery can include an aging degree of the battery, a state of charge of the battery, and so on.

Besides that a temperature change caused by the battery's own charging and discharging may affect charging characteristics of the battery, an ambient temperature may also affect the charging characteristics of the battery. The reason is that there are electrochemical reactions in the battery, when the temperature is high, it can improve activity of internal chemical substances, improve speeds of internal electrochemical reactions, and then improve utilization of the internal chemical substances. On the contrary, when the temperature is low, the speeds of the electrochemical reactions inside the battery decrease, and energy released by the battery will decrease.

As the number of battery cycles increases, the health state of the battery continues to deteriorate, an internal resistance of the battery gradually increases, and a capacity gradually decreases, which will also cause changes in charging characteristics of the battery.

In one embodiment, the operation of determining a charging current acting on the battery according to the environmental information and the parameter information includes: determining a charging current acting on the battery according to a mapping relationship between the environmental information, the parameter information and the charging current. During a test process before leaving the factory or returning to the factory for maintenance, the battery with different parameter information is test under different environmental information to obtain the maximum charging current corresponding to different environmental information and parameter information, and then the environmental information, the parameter information and the maximum charging current obtained by testing are stored in association into the battery. Thus, when the battery is charged, the environmental information of the environment where the battery is located and the parameter information of the battery are acquired, the maximum charging current that can be born by a current health state of the battery can be determined according to the mapping relationship between the environmental information, the parameter information and the charging current that, and then the charging current is controlled to be less than or equal to the maximum charging current to perform charging.

In one embodiment, the method further includes: acquiring environment information of an environment where the battery is located, parameter information of the battery, and the charging current acting on the battery during the test process, wherein the change value of electric quantity per unit voltage of the battery is greater than a preset value under the charging current; and storing the environment information, the parameter information, and the charging current in association into the battery.

During a test process, a battery with different parameter information is controlled under different environment information to perform a charging operation. A change value of electricity amount of the battery when a voltage of the battery is charged from an initial voltage to a target voltage is acquired; a change value of electricity amount per unit voltage is determined according to a voltage difference between the target voltage and the initial voltage, and the change value of electricity amount; and when the change value of electricity amount per unit voltage is less than or equal to a preset value, a charging current acting on the battery is reduced until the unit voltage change value is greater than the preset value. The maximum charging current that can be born by a current health state of the battery can be determined according to a relationship between the change value of electricity amount per unit voltage and the preset value, and the preset value can be set according to actual applications, optionally the preset value is zero. If the change value of electricity amount per unit voltage is less than or equal to the preset value, it means that the charging current has exceeded the maximum charging current that can be born by a current health state of the battery at this time; if the change value of electricity amount per unit voltage is greater than the preset value, it means that the charging current is within the maximum charging current that can be born by a current health state of the battery at this time.

Specifically, if the change value of electricity amount per unit voltage is greater than the preset value, the charging current is increased until the change value of electricity amount per unit voltage is less than or equal to the preset value, then a charging current corresponding to a change value being greater than the preset value and closest to the preset value is taken as the maximum charging current.

Alternatively, if the change value of electricity amount per unit voltage is greater than the preset value, a difference between the change value and the preset value is calculated, and when the difference is greater than a predetermined value, the charging current acting on the battery is increased until the difference is less than the predetermined value, and a charging current corresponding to the difference being less than the predetermined value is taken as the maximum charging current. If the difference is greater than the predetermined value, it means that the charging current has not reached the maximum charging current that can be born by a current health state of the battery at this time. Therefore, the charging current acting on the battery can be increased until the difference between the change value of electricity amount per unit voltage and the preset value is less than the predetermined value (the predetermined value is positive and infinitely small, and can specifically be set according to actual applications), then the charging current at this time is taken as the maximum charging current that can be born by a current health state of the battery.

A battery test system can be set according to actual applications. Optionally, the battery test system can be composed of a battery charging and discharging system, an environmental chamber and an industrial control computer. The battery charging and discharging system has independent charging and discharging control channels, and each channel can provide a high-precision DC power. The charging and discharging system is also equipped with temperature acquisition sensors. The environmental chamber can provide a temperature-controlled environment space to simulate different environmental temperatures; the industrial control computer is connected in communication with the battery charging and discharging system and the environmental chamber realize joint control for the two.

In this embodiment, by a pre-stored mapping relationship between the environment information, the parameter information, and the charging current, acquiring the environment information of an environment where a battery is located and parameter information of the battery can determine the maximum charging current that can be born by a current health state of the battery, and the charging current is controlled to be less than or equal to the maximum charging current; not only is a life of the battery not influenced, but also charging time is shortened.

It should be understood that although the operations in the flow charts of FIG. 2 and FIG. 5 are sequentially displayed as indicated by the arrows, these operations are not necessarily performed sequentially in the order indicated by the arrows. Unless explicitly stated in the present application, there is no strict order limitation for the execution of these operations, and these operations can be executed in other orders. Moreover, at least some of the operations in FIG. 2 and FIG. 5 may include multiple sub-operations or multiple stages. These sub-operations or stages are not necessarily executed at the same time, but can be executed at different times. The execution orders of these sub-operations or stages are not necessarily performed sequentially, but may be executed alternately or alternately with other operations or at least some of the sub-operations or stages of other operations.

FIG. 6 is a structural block diagram of a batter charging device in one embodiment. As shown in FIG. 6, a battery charging device includes an acquiring module 610, a determining module 620, and a regulating module 630.

The acquiring module 610 is configured to: during a process of charging a battery, acquire a change value of electricity amount of the battery when a voltage of the battery is charged from an initial voltage to a target voltage.

The determining module 620 is configured to: determine a change value of electricity amount per unit voltage according to a voltage difference between the target voltage and the initial voltage, and the change value of electricity amount.

The regulating module 630 is configured to: when the change value of electricity amount per unit voltage is less than or equal to a preset value, reduce a charging current acting on the battery until the unit voltage change value is greater than the preset value.

In one embodiment, as shown in FIG. 6, the regulating module 630 is further configured to: when the change value of electricity amount per unit voltage is greater than the preset value, increase the charging current or keep the charging current being unchanged.

In one embodiment, as shown in FIG. 6, the regulating module 630 is further configured to: when the change value of electricity amount per unit voltage is greater than the preset value, calculate the difference between the change value and the preset value; when the difference is greater than a predetermined value, increase the charging current acting on the battery; and when the difference is less than or equal to the predetermined value, keep the charging current acting on the battery being unchanged.

In one embodiment, as shown in FIG. 6, the determining module 620 is further configured to: derivate the voltage difference using the change value of electricity amount to obtain a first derivative value; derivate the voltage difference using the first derivative value to obtain a second derivative value; and use the second derivative value as the change value of the electricity amount per unit voltage.

In one embodiment, as shown in FIG. 6, the determining module 620 is further configured to: generate a first curve according to the voltage difference and the change value of electricity amount, wherein the first curve represents a change relationship between electricity amount per unit voltage and the voltage of the battery; generate a second curve according to the first curve and the voltage difference, wherein the second curve represents a change relationship between a change value of electricity amount per unit voltage and the voltage of the battery; and acquire a vertical axis value of the second curve to obtain the change value of electricity amount per unit voltage.

FIG. 7 is a structural block diagram of a batter charging device in one embodiment. As shown in FIG. 7, a battery charging device includes an acquiring module 710, a determining module 720, and an executing module 730.

Among them, the acquiring module 710 is configured to acquire environment information of an environment where a battery is located and parameter information of the battery. The determining module 720 is configured to determine a charging current acting on the battery according to a mapping relationship between the environment information, the parameter information, and the charging current. The executing module 730 is configured to charge the battery according to the charging current; wherein a method for acquiring the mapping relationship comprises: acquiring environment information of an environment where the battery is located, parameter information of the battery, and a charging current acting on the battery during a test process; wherein a change value of electricity amount per unit voltage of the battery is greater than a preset value under the charging current; and storing the environment information, the parameter information, and the charging current in association into the battery.

The division of the modules in the battery charging device is only for illustration. In other embodiments, the battery charging device may be divided into different modules as needed to complete all or some of the functions of the battery charging device.

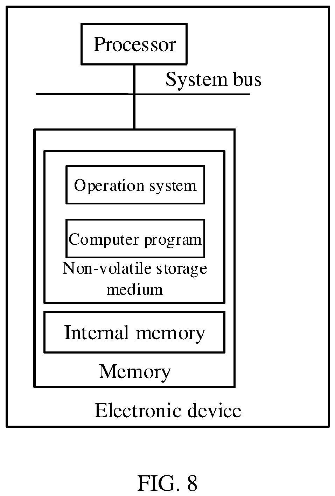

FIG. 8 is a schematic diagram of an internal structure of an electronic device in one embodiment. As shown in FIG. 8, the electronic device includes a processor and a memory connected through a system bus. Among them, the processor is used to provide calculation and control capabilities to support operation of the entire electronic device. The memory may include a non-volatile storage medium and an internal memory. The non-volatile storage medium stores an operating system and computer programs. The computer program can be executed by the processor to implement a battery charging method provided by the following embodiments. The internal memory provides a cached operating environment for the operating system and computer programs in the non-volatile storage medium. The electronic device can be a mobile phone, a tablet computer, or a personal digital assistant, or a wearable device, etc.

The implementation of each module in the battery charging device provided in the embodiment of the present application may be in the form of a computer program. The computer program can be run on a terminal or a server. A program module constituted by the computer program can be stored in the memory of the terminal or the server. When the computer program is executed by the processor, the operations of the methods described in the embodiments of the present application are implemented.

An embodiment of the present application further provides a computer readable storage medium. Regarding one or more non-transitory computer readable storage medium including computer executable instructions, when the computer executable instructions are executed by one or more processor, the processor is enabled to execute operations of a battery charging method.

A computer program product, when being run in a computer, makes the computer to execute a battery charging method.

Any reference to memories, storages, databases, or other media used in the present application may include non-volatile and/or volatile memories. Non-volatile memories may include a read only memory (ROM), a programmable ROM (PROM), an electrically programmable ROM (EPROM), an electrically erasable programmable ROM (EEPROM), or a flash memory. Volatile memories may include a random access memory (RAM), which acts as an external cache memory. As an illustration but not a limitation, the RAM is available in many forms, such as a static RAM (SRAM), a dynamic RAM (DRAM), a synchronous DRAM (SDRAM), a double data rate SDRAM (DDR SDRAM), an enhanced SDRAM (ESDRAM), a synchronous Link (Synchlink) DRAM (SLDRAM), a memory bus (Rambus) direct RAM (RDRAM), a direct memory bus dynamic RAM (DRDRAM), and a memory bus dynamic RAM (RDRAM).

The above embodiments only express a few implementation manners of the present application, the description is relatively specific and detailed, but it should not be accordingly understood as any limitation to the patent scope of the present application. It should be pointed out that for those of ordinary skill in the art, several modifications and improvements can be made without departing from the concept of the present application, and these all fall within the protection scope of the present application. Therefore, the patent protection scope of the present application should be subject to the appended claims.

## Claims

1. A battery charging method, comprising:
during a process of charging a battery, acquiring a change value of electricity amount of the battery when a voltage of the battery is charged from an initial voltage to a target voltage;
determining a change value of electricity amount per unit voltage according to a voltage difference between the target voltage and the initial voltage, and the change value of electricity amount; and
when the change value of electricity amount per unit voltage is less than or equal to a preset value, reducing a charging current acting on the battery until the unit voltage change value is greater than the preset value.

2. The method according to claim 1, after the determining a change value of electricity amount per unit voltage according to a voltage difference between the target voltage and the initial voltage, and the change value of electricity amount, further comprising:
when the change value of electricity amount per unit voltage is greater than the preset value, increasing the charging current acting on the battery.

3. The method according to claim 1, after the determining a change value of electricity amount per unit voltage according to a voltage difference between the target voltage and the initial voltage, and the change value of electricity amount, further comprising:
when the change value of electricity amount per unit voltage is greater than the preset value, keeping the charging current acting on the battery being unchanged.

4. The method according to claim 1, after the determining a change value of electricity amount per unit voltage according to a voltage difference between the target voltage and the initial voltage, and the change value of electricity amount, further comprising:
when the change value of electricity amount per unit voltage is greater than the preset value, calculating a difference between the change value and the preset value; and
when the difference is greater than a predetermined value, increasing the charging current acting on the battery.

5. The method according to claim 4, further comprising:
when the change value of electricity amount per unit voltage is less than or equal to the preset value, keeping the charging current acting on the battery being unchanged.

6. The method according to claim 1, wherein, the determining a change value of electricity amount per unit voltage according to a voltage difference between the target voltage and the initial voltage, and the change value of electricity amount comprises:
derivating the voltage difference using the change value of electricity amount to obtain a first derivative value;
derivating the voltage difference using the first derivative value to obtain a second derivative value; and
using the second derivative value as the change value of the electricity amount per unit voltage.

7. The method according to claim 1, wherein, the determining a change value of electricity amount per unit voltage according to a voltage difference between the target voltage and the initial voltage, and the change value of electricity amount comprises:
generating a first curve according to the voltage difference and the change value of electricity amount, wherein the first curve represents a change relationship between electricity amount per unit voltage and the voltage of the battery;
generating a second curve according to the first curve and the voltage difference, wherein the second curve represents a change relationship between a change value of electricity amount per unit voltage and the voltage of the battery; and
acquiring a vertical axis value of the second curve to obtain the change value of electricity amount per unit voltage.

8. A battery charging method, comprising:
acquiring environment information of an environment where a battery is located and parameter information of the battery;
determining a charging current acting on the battery according to a mapping relationship between the environment information, the parameter information, and the charging current; and
charging the battery according to the charging current.

9. The method according to claim 8, wherein an operation of acquiring the mapping relationship comprises:
acquiring environment information of an environment where the battery is located, parameter information of the battery, and a charging current acting on the battery during a test process; wherein a change value of electricity amount per unit voltage of the battery is greater than a preset value under the charging current; and
storing the environment information, the parameter information, and the charging current in association into the battery.

10. The method according to claim 9, wherein the environment information of an environment where the battery is located comprises a temperature, and the parameter information of the battery comprises at least one of an aging degree of the battery and a state of charge of the battery.

11. An electronic device, comprising a memory and a processor, wherein the memory stores a computer program, and the computer program, when being executed by the processor, makes the processor to execute the following operations:
during a process of charging a battery, acquiring a change value of electricity amount of the battery when a voltage of the battery is charged from an initial voltage to a target voltage;
determining a change value of electricity amount per unit voltage according to a voltage difference between the target voltage and the initial voltage, and the change value of electricity amount; and
when the change value of electricity amount per unit voltage is less than or equal to a preset value, reducing a charging current acting on the battery until the unit voltage change value is greater than the preset value.

12. The electronic device according to claim 11, wherein after executing the operation of determining a change value of electricity amount per unit voltage according to a voltage difference between the target voltage and the initial voltage, and the change value of electricity amount, the processor further executes the following operation:
when the change value of electricity amount per unit voltage is greater than the preset value, increasing the charging current acting on the battery.

13. The electronic device according to claim 11, wherein after executing the operation of determining a change value of electricity amount per unit voltage according to a voltage difference between the target voltage and the initial voltage, and the change value of electricity amount, the processor further executes the following operation:
when the change value of electricity amount per unit voltage is greater than the preset value, keeping the charging current acting on the battery being unchanged.

14. The electronic device according to claim 11, wherein after executing the operation of determining a change value of electricity amount per unit voltage according to a voltage difference between the target voltage and the initial voltage, and the change value of electricity amount, the processor further executes the following operations:
when the change value of electricity amount per unit voltage is greater than the preset value, calculating a difference between the change value and the preset value; and
when the difference is greater than a predetermined value, increasing the charging current acting on the battery.

15. The electronic device according to claim 14, wherein the processor further executes the following operation:
when the change value of electricity amount per unit voltage is less than or equal to the preset value, keeping the charging current acting on the battery being unchanged.

16. The electronic device according to claim 11, wherein after executing the operation of determining a change value of electricity amount per unit voltage according to a voltage difference between the target voltage and the initial voltage, and the change value of electricity amount, the processor further executes the following operations:
derivating the voltage difference using the change value of electricity amount to obtain a first derivative value;
derivating the voltage difference using the first derivative value to obtain a second derivative value; and
using the second derivative value as the change value of the electricity amount per unit voltage.

17. The electronic device according to claim 11, wherein after executing the operation of determining a change value of electricity amount per unit voltage according to a voltage difference between the target voltage and the initial voltage, and the change value of electricity amount, the processor further executes the following operation:
generating a first curve according to the voltage difference and the change value of electricity amount, wherein the first curve represents a change relationship between electricity amount per unit voltage and the voltage of the battery;
generating a second curve according to the first curve and the voltage difference, wherein the second curve represents a change relationship between a change value of electricity amount per unit voltage and the voltage of the battery; and
acquiring a vertical axis value of the second curve to obtain the change value of electricity amount per unit voltage.

18. An electronic device, comprising a memory and a processor, wherein the memory stores a computer program, and the computer program, when being executed by the processor, makes the processor execute the following operations:
acquiring environment information of an environment where a battery is located and parameter information of the battery;
determining a charging current acting on the battery according to a mapping relationship between the environment information, the parameter information, and the charging current; and
charging the battery according to the charging current.

19. The electronic device according to claim 18, wherein the processor further executes the following operations:
acquiring environment information of an environment where the battery is located, parameter information of the battery, and a charging current acting on the battery during a test process; wherein a change value of electricity amount per unit voltage of the battery is greater than a preset value under the charging current; and
storing the environment information, the parameter information, and the charging current in association into the battery.

20. A computer readable storage medium storing a computer program, wherein the computer program, when being executed by a processor, implements the operations of the method according to any one of claims 1-10.
